# EUROPÄISCHE PATENTSCHRIFT

(11) **EP 2 220 405 B1**
(45) Veröffentlichungstag und Bekanntmachung des Hinweises auf die Patenterteilung: **11.07.2012**
(21) Anmeldenummer: 08856465.3
(22) Anmeldetag: 17.11.2008
(51) Int. Cl.: F16H 61/662

(54) **HYDRAULIKANORDNUNG ZUR STEUERUNG EINES KEGELSCHEIBEN-UMSCHLINGUNGSGETRIEBES**
HYDRAULIC ARRANGEMENT FOR CONTROLLING A BELT-DRIVEN CONICAL PULLEY TRANSMISSION
DISPOSITIF HYDRAULIQUE POUR LA COMMANDE D'UNE TRANSMISSION A VARIATION CONTINUE

(30) Priorität: 04.12.2007 US 5334
(43) Veröffentlichungstag der Anmeldung: 25.08.2010
(73) Patentinhaber: Schaeffler Technologies AG & Co. KG, 91074 Herzogenaurach (DE)
(72) Erfinder: PFISTER, Jochen, F-67000 Strasbourg (FR); MÜLLER, Eric, 67657 Kaiserslautern (DE); WILLEKE, Roshan, 77815 Bühl (DE)
(86) Internationale Anmeldenummer: PCT/DE2008/001899
(87) Internationale Veröffentlichungsnummer: WO 2009/071048

(56) Entgegenhaltungen:
- US-A- 4 735 113
- US-A- 5 222 418
- US-A1- 2002 004 436

## Beschreibung

Die Erfindung betrifft eine Hydraulikanordnung zur Steuerung eines Kegelscheiben-Umschlingungsgetriebes, mit einer Pumpe, die ein Arbeitsmedium aus einem Arbeitsmediumtank oder über ein Kühlerrücklaufventil aus einer Kühlerrücklaufleitung ansaugt.

Aus der US 4,735,113 ist eine solche Hydraulikanordnung bekannt. Dieses dokument wird als nächster stand der technik angesehen und offenbart die Merkmalene des oberbegriff des Anspruchs 1.

Aufgabe der Erfindung ist es, eine Hydraulikanordnung zur Steuerung eines Kegelscheiben-Umschlingungsgetriebes, mit einer Pumpe, die ein Arbeitsmedium aus einem Arbeitsmediumtank oder über ein Kühlerrücklaufventil aus einer Kühlerrücklaufleitung ansaugt, zu schaffen, durch die das Ansaugverhalten der Pumpe verbessert werden kann.

Die Aufgabe ist bei einer Hydraulikanordnung zur Steuerung eines Kegelscheiben-Umschlingungsgetriebes, mit einer Pumpe, die ein Arbeitsmedium aus einem Arbeitsmediumtank oder über ein Kühlerrücklaufventil aus einer Kühlerrücklaufleitung ansaugt, wobei das Kühlerrücklaufventil als Mindestdruckventil ausgeführt ist, das eine Verbindung zwischen der Kühlerrücklaufleitung und einer Pumpenansaugleitung durch das Kühlerrücklaufventil geschlossen hält, solange ein vorgegebener Mindestdruck in der Kühlerrücklaufleitung unterschritten wird, und das die Verbindung zwischen der Kühlerrücklaufleitung und der Pumpenansaugleitung durch das Kühlerrücklaufventil öffnet, sobald der vorgegebene Mindestdruck in der Kühlerrücklaufleitung überschritten wird, wobei das Kühlerrücklaufventil einen Ventilkolben mit einer Wirkfläche umfasst, die in einer Schließstellung des Ventilkolbens gegen eine Dichtkante vorgespannt ist, wobei der Ventilkolben eine Rücklaufdruckwirkfläche aufweist, die entgegen einer auf den Ventilkolben wirkenden Vorspannkraft mit dem Druck aus der Kühlerrücklaufleitung beaufschlagt ist, wobei weiterhin die Rücklaufdruckwirkfläche eine Teilfläche aufweist, die direkt mit der Kühlerrücklaufleitung in Verbindung steht, dadurch gelöst, dass die Rücklaufdruckwirkfläche eine weitere Teilfläche aufweist, die über eine Blende mit der Kühlerrücklaufleitung in Verbindung steht. Über die Blende wirkt der Druck aus der Kühlerrücklaufleitung nur indirekt auf die weitere Teilfläche der Rücklaufdruckwirkfläche. Das Kühlerrücklaufventil wirkt somit als Absolutdruckventil und nicht als Differenzdruckventil. Dadurch kann auf einfache Art und Weise ein unerwünschtes Ansaugen von Luft aus der Kühlerrücklaufleitung verhindert werden. Darüber hinaus kann der Rückstaudruck der Steuerung gesenkt werden. Der vorgegebene Mindestdruck in der Kühlerrücklaufleitung beträgt vorzugsweise etwa 1,8 bar. In der Schließstellung ist die Verbindung zwischen der Kühlerrücklaufleitung und der Pumpenansaugleitung durch den Ventilkolben verschlossen. Die Rucklaufdruckwirkfläche steht direkt oder indirekt mit dem Arbeitsmedium in der Kühlerrücklaufleitung in Verbindung. Vorzugsweise ist die Kühlerrücklaufleitung so an das Kühlerrücklaufventil angeschlossen, dass der Druck aus der Kühlerrücklaufleitung direkt auf die Teilfläche der Rücklaufdruckwirkfläche wirkt.

Ein bevorzugtes Ausführungsbeispiel der Hydraulikanordnung ist dadurch gekennzeichnet, dass der Ventilkolben durch eine Schließfeder in seine Schließstellung vorgespannt ist. Die Schließfeder ist vorzugsweise als Druckfeder ausgeführt, die ein Ende des Ventilkolbens mit einer Vorspannkraft beaufschlagt.

Ein weiteres bevorzugtes Ausführungsbeispiel der Hydraulikanordnung ist dadurch gekennzeichnet, dass die Wirkfläche als Kegelsitzfläche ausgeführt ist. Der Kegelsitz bewirkt eine sehr gute Abdichtung zur Pumpe.

Ein weiteres bevorzugtes Ausführungsbeispiel der Hydraulikanordnung ist dadurch gekennzeichnet, dass die Teilfläche radial außen an der Wirkfläche ausgebildet ist. Die Teilfläche ist vorzugsweise radial außerhalb einer Ventilgehäusedichtkante vorgesehen, an welcher die Kegelsitzfläche in der Schließstellung des Ventilkolbens zur Anlage kommt.

Ein weiteres bevorzugtes Ausführungsbeispiel der Hydraulikanordnung ist dadurch gekennzeichnet, dass die Blende einen Durchmesser von etwa 0,75 Millimeter aufweist. Dieser Wert hat sich im Rahmen der vorliegenden Erfindung als besonders vorteilhaft erwiesen.

Ein weiteres bevorzugtes Ausführungsbeispiel der Hydraulikanordnung ist dadurch gekennzeichnet, dass der Ventilkolben eine Ansaugdruckwirkfläche aufweist, die mit dem Druck in der Pumpenansaugleitung beaufschlagt ist. Die Ansaugdruckwirkfläche ist vorzugsweise an dem der Schließfeder abgewandten Ende des Ventilkolbens vorgesehen.

Weitere Vorteile, Merkmale und Einzelheiten der Erfindung ergeben sich aus der nachfolgenden Beschreibung, in der unter Bezugnahme auf die Zeichnung ein Ausführungsbeispiel im Einzelnen beschrieben ist. Es zeigen:
- Figur 1: einen Hydraulikschaltplan einer Hydraulikanordnung zur Steuerung eines Kegelscheiben-Umschlingungsgetriebes und
- Figur 2: einen vergrößerten Ausschnitt aus Figur 1 mit einem erfindungsgemäßen Kühlerrücklaufventil.

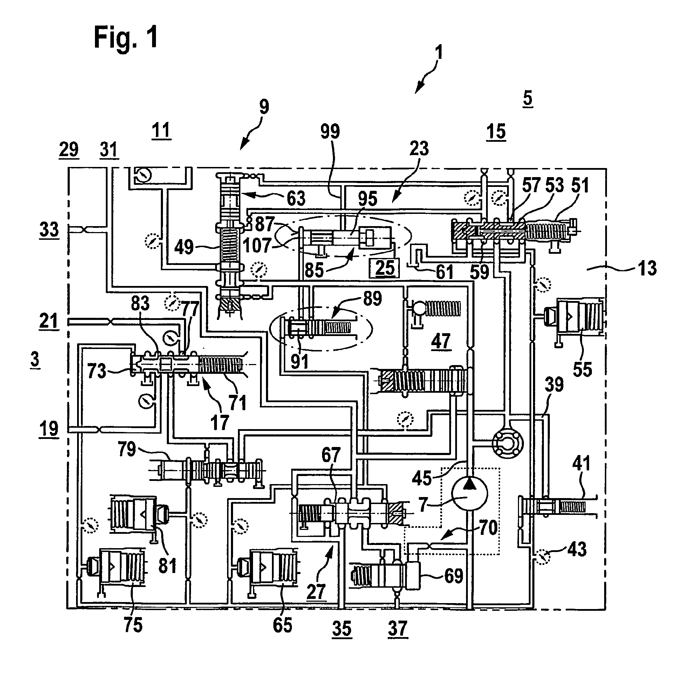

Figur 1 zeigt einen teilweise dargestellten Schaltplan einer Hydraulikanordnung 1. Die Hydraulikanordnung 1 dient zur Steuerung eines Kegelscheiben-Umschlingungsgetriebes, das mit der Bezugsziffer 3 in Figur 1 angedeutet ist. Das Kegelscheiben-Umschlingungsgetriebe 3 kann Teil eines Triebstrangs eines Kraftfahrzeuges 5 sein, das mit der Bezugsziffer 5 angedeutet ist. Die Hydraulikanordnung 1 weist eine hydraulische Energiequelle 7, beispielsweise eine mechanisch oder elektrisch angetriebene Hydraulikpumpe zur Förderung eines Hydraulikmediums auf. Zum Antrieb kann die hydraulische Energiequelle 7 einem nicht näher dargestellten Verbrennungsmotor des Kraftfahrzeuges 5 zugeordnet sein. Die hydraulische Energiequelle 7 dient zur Versorgung der Hydraulikanordnung 1 mit hydraulischer Energie.

Der hydraulischen Energiequelle 7 ist eine erste Ventilanordnung 9 nachgeschaltet, die einem Momentenfühler 11 zugeordnet ist. Die erste Ventilanordnung 1 und der Momentenfühler 11 dienen zum Bereitstellen und/oder Steuern eines Anpressdrucks zur Übertragung von Drehmomenten zwischen Kegelscheiben und einem entsprechenden Umschlingungsorgan des Kegelscheiben-Umschlingungsgetriebes 3, insbesondere in Abhängigkeit der an dem Kegelscheiben-Umschlingungsgetriebe 3 anliegenden Drehmomente. Stromabwärts ist der Momentenfühler 11 über einen nicht dargestellten Kühler einem Kühlerrücklauf 31 zugeordnet. Der Momentenfühler 11 kann mittels einer geeigneten Steuerkante und abhängig von den anliegenden Drehmomenten einen von der hydraulischen Energiequelle gelieferten Systemdruck 45 erhöhen oder absenken.

Der hydraulischen Energiequelle 7 ist außerdem eine zweite Ventilanordnung 13 nachgeschaltet. Die zweite Ventilanordnung 13 ist mittels Bezugszeichen 15 angedeuteten Kegelscheiben zugeordnet und dient zur Verstellung der Kegelscheiben 15, also zum Einstellen des Übersetzungsverhältnisses des Kegelscheiben-Umschlingungsgetriebes 3.

Der hydraulischen Energiequelle 7 ist ferner eine dritte Ventilanordnung 17 nachgeschaltet, die zur Ansteuerung einer Vorwärtskupplung 19 und einer Rückwärtskupplung 21 zugeordnet ist.

Der hydraulischen Energiequelle 7 ist außerdem eine hydraulische Parksperren-Entriegelungsanordnung 23 nachgeschaltet. Die Parksperren-Entriegelungsanordnung 23 der Hydraulikanordnung 1 ist einer mittels des Bezugszeichens 25 angedeuteten mechanischen Parksperre 25 zugeordnet. Die Zuordnung kann mittels geeigneter mechanischer Hilfsmittel, beispielsweise eines Hebels, erfolgen. Mittels der Parksperren-Entriegelungsanordnung 23 kann die mechanische Parksperre 25 des Kraftfahrzeuges 5 eingelegt, also hergestellt und wieder gelöst werden.

Die hydraulische Energiequelle 7 dient außerdem zur Versorgung einer vierten Ventilanordnung 27. Die vierte Ventilanordnung 27 dient zum Bereitstellen eines ebenfalls mittels der hydraulischen Energiequelle 7 bereitgestellten Kühlölvolumenstroms. Hierzu ist die vierte Ventilanordnung 27 einem mittels des Bezugszeichens 29 angedeuteten Kühlkreislauf, insbesondere dem Kühlerrücklauf 31, einer aktiven Hydronic-Kühlung 33, einer Strahlpumpe 35 sowie einer Fliehölhaube 37 zugeordnet.

Die hydraulische Energiequelle 7 ist stromabwärts über einen Abzweig 39 einem Vorsteuerdruckregelventil 41 zugeordnet. Das Vorsteuerdruckregelventil 41 regelt stromabwärts einen Vorsteuerdruck 43, beispielsweise von circa 5 bar, während die hydraulische Energiequelle 7 einen höheren Systemdruck 45 bereitstellt. Der Vorsteuerdruck dient auf bekannte Art und Weise mittels geeigneten Proportionalventilen, beispielsweise elektrisch ansteuerbaren Proportionalventilen, zur Steuerung der Schaltkomponenten der Hydraulikanordnung 1. Zum Einstellen und Verteilen der von der hydraulischen Energiequelle 7 gelieferten hydraulischen Energie ist eine fünfte Ventilanordnung 47 vorgesehen. Die fünfte Ventilanordnung 47 stellt eine vorrangige Versorgung des Momentenfühlers 11 und der zweiten Ventilanordnung 13 sicher, beispielsweise beim Anlassen des Motors des Kraftfahrzeuges 5.

Zur Einstellung beziehungsweise Regelung des Systemdrucks 45 vor dem Momentenfühler 11, weist dieser nicht dargestellte Druckregelventile auf. Dem Momentenfühler 11 vorgeschaltet weist die erste Ventilanordnung 9 ein Systemdruckventil 49 auf. Das Systemdruckventil 49 ist der fünften Ventilanordnung 47 nachgeschaltet und lässt einen entsprechenden Volumenstrom für den Momentenfühler 11 passieren, wobei der Systemdruck 45 stromabwärts auf einen Mindestsystemdruck, beispielsweise von 6 bar, eingeregelt werden kann. Zur Einstellung des Anpressdrucks durch kurzfristiges zusätzliches Anheben des Systemdrucks 45 ist das Systemdruckventil 49 über ein Oderglied 63 stromaufwärts zusätzlich der zweiten Ventilanordnung 13 zugeordnet.

Die zweite Ventilanordnung 13 weist ein der hydraulischen Energiequelle 7 nachgeschaltetes siebtes Ventil 51 mit einem siebten Steuerkolben 53 auf. Der siebte Steuerkolben 53 ist stromabwärts einem achten Ventil 55 zur Ansteuerung zugeordnet. Bei dem achten Ventil 55 kann es sich um ein Steuerventil, beispielsweise um ein elektrisch ansteuerbares Proportionalventil handeln. Das siebte Ventil 51 weist eine erste Flut oder Lamelle 57 sowie eine zweite Flut oder Lamelle 59 auf, die jeweils entsprechenden Verstellorganen der Kegelscheiben 15 zugewiesen sind. Mittels des siebten Steuerkolbens 53 des siebten Ventils 51 kann die hydraulische Energiequelle 7 wahlweise kontinuierlich, also fließend übergehend der ersten Flut oder Lamelle 57 oder der zweiten Flut oder Lamelle 59 zugeordnet werden. Die jeweils nicht der hydraulischen Energiequelle 7 zugeordnete Flut oder Lamelle kann entsprechend einem Tank 61 zugeordnet werden. In einer Mittenstellung können beide Fluten oder Lamellen 57 und 59 von der hydraulischen Energiequelle 7 abgetrennt und auf den Tank 61 geschaltet werden. Mittels des siebten Ventils 51 der zweiten Ventilanordnung 13 kann also in den Fluten oder Lamellen 57 und 59 zum Verstellen der Kegelscheiben 15 ein gewünschtes Druckverhältnis eingestellt werden. Die Fluten oder Lamellen 57 und 59 sind außerdem über das Oder-Glied 63 des Systemdruckventils 49 diesem zugeordnet. Über die Zuordnung kann der mittels des Systemdruckventils 49 eingeregelte Mindestsystemdruck in einem gewünschten Maß bei mittels des siebten Ventils 51 vorgenommenen Verstellbewegungen diesem angepasst werden, also beispielsweise angehoben werden.

Die vierte Ventilanordnung 27 weist ein mittels eines vierten Ventils 65 angesteuertes Kühlölregelventil 67 auf. Das Kühlölregelventil 67 ist der fünften Ventilanordnung 47 nachgeschaltet und wird über dieses mittels der hydraulischen Energiequelle 7 mit hydraulischer Energie versorgt. Die vierte Ventilanordnung 27 weist außerdem ein Rückführventil 69 auf, das stromaufwärts direkt der hydraulischen Energiequelle 7 beziehungsweise einem Pumpeninjektor oder einer Drosselhinterblende 70 der hydraulischen Energiequelle 7 zugeordnet ist. Das Rückführventil 69 ist stromabwärts über eine Flut oder Lamelle des Rückführventils 69 durchgeschaltet der Fliehölhaube 37 zugeordnet und leitet bei ansteigenden Volumenströmen einen Teilstrom direkt in den Pumpeninjektor 70. Das Kühlölregelventil 67 dient zum Aufrechterhalten und Einregeln eines gewünschten Kühlölvolumenstroms zu den zu kühlenden Komponenten 31, 33, 35 und 37.

Die dritte Ventilanordnung 17 weist ein erstes Ventil 71 mit einem ersten Steuerkolben 73 auf. Zur Ansteuerung des ersten Steuerkolbens 73 ist dieser stromabwärts einem dritten Ventil 75 zugeordnet, beispielsweise einem Steuerventil, beispielsweise einem elektrisch ansteuerbaren Proportionalventil. Der erste Steuerkolben 73 des ersten Ventils 71 kann zur Ansteuerung der Vorwärtskupplung 19 und der Rückwärtskupplung 21 im Wesentlichen drei Schaltstellungen einnehmen. In einer ersten Schaltstellung, die in Figur 1 gezeigt ist, bei der die Rückwärtskupplung 21 mit Druck beaufschlagt ist, ist eine erste Flut, oder Lamelle 77 des ersten Ventils 71 mittels des ersten Steuerkolbens 73 der hydraulischen Energiequelle 7 zugeordnet, wobei die Zuordnung zur hydraulischen Energiequelle 7 über ein fünftes Ventil 79 erfolgt. Das fünfte Ventil 79 ist mittels eines sechsten Ventils 81, beispielsweise ein Steuerventil, beispielsweise ein elektrisch ansteuerbares Proportionalventil, ansteuerbar und dient zum Bereitstellen beziehungsweise Steuern und/oder Regeln eines zum Schließen der wahlweise nachgeschalteten Kupplungen 19 und 21. Falls ein zu übertragendes Drehmoment ansteht, kann der Druck beispielsweise bis zu 20 bar betragen. Vorteilhaft kann das fünfte Ventil 79 zusätzlich dazu verwendet werden, beispielsweise bei einer Störung, vorzugsweise bei einem Stromausfall, das nachgeschaltete erste Ventil 71 drucklos zu schalten, also die hydraulische Energiequelle 7 von dem ersten Ventil 71 abzutrennen. Vorzugsweise können dazu sowohl der Zulauf des ersten Ventils 71 als auch die hydraulische Energiequelle 7 auf den Tank 61 geschaltet werden.

In einer zweiten Schaltstellung, die einer, in Ausrichtung der Figur 1 gesehen, Verlagerung des ersten Steuerkolbens 73 des ersten Ventils 71 nach rechts entspricht, kann die Verbindung zu dem vorgeschalteten fünften Ventil 79 unterbrochen werden. Gleichzeitig kann mittels des ersten Steuerkolbens 73 des ersten Ventils 71 die erste Flut oder Lamelle 77 auf den Tank 61 geschaltet werden, so dass die Rückwärtsfahrkupplung drucklos ist. Außerdem kann in dieser Schaltstellung auch die Vorwärtskupplung 19 über eine zweite Flut oder Lamelle 83 des ersten Ventils 71 auf den Tank 61 geschaltet werden.

In einer dritten Schaltstellung, die, in Ausrichtung der Figur 1 gesehen, einer weiteren Verlagerung nach rechts des ersten Steuerkolbens 71 entspricht, kann die zweite Flut oder Lamelle 83 dem fünften Ventil 79 und die erste Flut oder Lamelle 77 dem Tank 61 zugeordnet werden. In dieser dritten Schaltstellung, die einem eingelegten Vorwärtsgang des Kraftfahrzeuges 5 entspricht, ist also die Vorwärtskupplung 19 mit Druck beaufschlagt und die Rückwärtskupplung 21 drucklos geschaltet.

Die Parksperren-Entriegelungsanordnung 23 weist einen zweigeteilten Parksperrzylinder 85 auf. Der Parksperrzylinder 85 kann mittels einer, in Figur 1 nicht näher dargestellten Rückstellfeder der Parksperre 25, in Ausrichtung der Figur 1 gesehen, nach links vorgespannt sein. Entgegen dieser Vorspannung kann der Parksperrzylinder 85 zum Lösen der Parksperre 25, in Ausrichtung der Figur 1 gesehen, nach rechts verlagert werden. Zum Aufbringen der entsprechenden hydraulischen Kraft ist eine Stirnseite 87 des Parksperrzylinders 85 einem zweiten Ventil 89 der Parksperren-Entriegelungsanordnung 23 nachgeschaltet. Es ist denkbar, zur Erhöhung des Systemdrucks 45 während des Entriegelns der Parksperre 25 zeitgleich das siebte Ventil 51 der zweiten Ventilanordnung 13 in eine beliebige Verstellrichtung zu betätigen, wobei über das nachgeschaltete Oderglied und das Systemdruckventil 49 der Systemdruck 45 erhöht wird, zum Beispiel auf bis zu 50 bar.

Das zweite Ventil 89 der Parksperren-Entriegelungsanordnung 23 ist der hydraulischen Energiequelle 7 nachgeschaltet, wobei die Stirnseite 87 des Parksperrzylinders 85 dem Systemdruck 45 der hydraulischen Energiequelle 7 mittels eines zweiten Steuerkolbens 91 des zweiten Ventils 89 direkt zuordenbar ist. Die Ansteuerung des zweiten Steuerkolbens 91 kann mittels des vierten Ventils 65 der vierten Ventilanordnung 27 erfolgen, wobei der zweite Steuerkolben 91 stromabwärts dem vierten Ventil 65 zugeordnet ist. Das Kühlölregelventil 67 und das zweite Ventil 89 werden also gleichermaßen von dem vierten Ventil 65 angesteuert, wobei beispielsweise die Parksperre 25 bei gleichzeitigem Einschalten des Kühlölvolumenstroms gelöst werden kann und umgekehrt. Es ist jedoch auch denkbar, die Steuerflächen und/oder Wirkungsrichtungen der Ventile 67 und 89 unterschiedlich auszulegen, beispielsweise so, dass zunächst die Parksperre 25 entriegelt und bei einer weiteren Druckerhöhung des vierten Ventils 65 auch der Schieber des Kühlölregelventils 67 zur Aktivierung der Kühlung betätigt wird. Bei dieser Auslegung ist also ein Lösen der Parksperre 25 ohne eine gleichzeitige zwangsweise Aktivierung der Kühlung möglich.

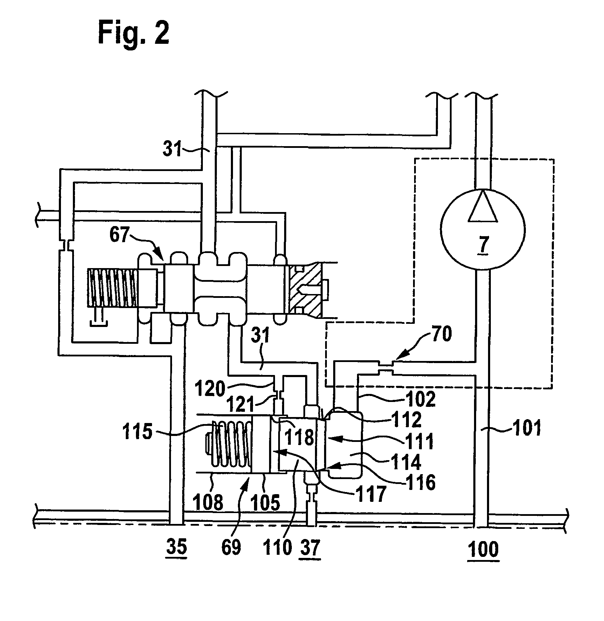

In Figur 2 ist der Ausschnitt mit dem Rückführventil 69, das auch als Kühlerrücklaufventil 69 bezeichnet wird, vergrößert dargestellt. In der vergrößerten Darstellung sieht man, dass die Pumpe 7 das Arbeitsmedium aus einem Tank 100 ansaugt. Zu diesem Zweck steht die Pumpe 7 über eine Pumpenansaugleitung 101 mit dem Tank 100 in Verbindung. Darüber hinaus steht die Pumpe 7 über eine weitere Pumpenansaugleitung 102 mit dem Kühlerrücklaufventil 69 in Verbindung. In der weiteren Pumpenansaugleitung 102 ist ein Pumpeninjektor 70 mit einer Blende oder Drossel angeordnet. Die weitere Pumpenansaugleitung 102 mündet in die Pumpenansaugleitung 101.

Gemäß einem wesentlichen Aspekt der Erfindung ist das Kühlerrücklaufventil 69 als Mindestdruckventil 105 ausgeführt. Das Mindestdruckventil 105 umfasst ein Ventilgehäuse 108, in dem ein Ventilkolben 110 hin und her bewegbar aufgenommen ist. Der Ventilkolben 110 weist an einer Stirnseite eine Ansaugdruckwirkfläche 111 auf, die einen Ansaugdruckraum 114 in dem Ventilgehäuse 108 begrenzt. In dem Ansaugdruckraum 114 mündet die weitere Pumpenansaugleitung 102, so dass die Ansaugdruckwirkfläche 111 mit dem Ansaugdruck beaufschlagt ist, der in der weiteren Pumpenansaugleitung 102 herrscht.

Die Ansaugdruckwirkfläche 111 geht radial außen in eine Wirkfläche 112 über, die im vorliegenden Beispiel als Kegelsitzfläche ausgeführt ist. In Figur 2 befindet sich der Ventilkolben 110 in seiner Schließstellung, in der die Kegelsitzfläche 112 an einer Dichtkante des Ventilgehäuses 108 anliegt. In der dargestellten Schließstellung des Ventilkolbens 110 ist eine Verbindung zwischen der Kühlerrücklaufleitung 31 und dem Ansaugdruckraum 114 beziehungsweise der weiteren Pumpenansaugleitung 102 durch den Ventilkolben 110 unterbrochen beziehungsweise gesperrt oder geschlossen. Der Ventilkolben 110 ist durch eine Schließfeder 115, die an dem der Ansaugdruckwirkfläche 111 abgewandten Ende des Ventilkolbens 110 angreift, in seine Schließstellung vorgespannt.

An dem Ventilkolben 110 ist des Weiteren eine Teilfläche 116 einer Rücklaufdruckwirkfläche vorgesehen. Im vorliegenden Beispiel wird die Teilfläche 116 der Rücklaufdruckwirkfläche von einem Bereich der Kegelsitzfläche 112 gebildet, der radial außerhalb der an dem Ventilgehäuse 108 vorgesehenen Dichtkante angeordnet ist. Die Teilfläche 116 der Rücklaufdruckwirkfläche ist über die Kühlerrücklaufleitung 31 direkt mit dem Rücklaufdruck beaufschlagt, der in der Kühlerrücklaufleitung 31 herrscht.

Die Rücklaufdruckwirkfläche umfasst zusätzlich zu der Teilfläche 116 eine weitere Teilfläche 117, die an einem Absatz 118 des Ventilkolbens 110 vorgesehen ist. Die weitere Teilfläche 117 ist, ebenso wie die Teilfläche 116, von der Schließfeder 115 abgewandt. Die weitere Teilfläche 117 steht über eine Kühlerrücklaufverbindungsleitung 120, in der eine Drossel 121 vorgesehen ist, nur indirekt, das heißt über die Drossel 121, mit der Kühlerrücklaufleitung 31 in Verbindung.

Im Ausgangszustand, in welchem der Druck in der Kühlerrücklaufleitung 31 null bar beziehungsweise Umgebungsdruck beträgt, verschließt der Ventilkolben 110 den Weg beziehungsweise die Verbindung von der Kühlerrücklaufleitung 31 zu der Pumpenansaugleitung 102 durch den Kegelsitz 112. Der Kegelsitz 112 bewirkt eine sehr gute Abdichtung zur Pumpe 7. In der Schließstellung des Ventilkolbens 110 saugt die Pumpe 7 das Arbeitsmedium nur aus dem Tank 100 an.

Wenn der Druck in der Kühlerrücklaufleitung 31 ansteigt, dann ergibt sich an der Rücklaufdruckwirkfläche, welche die beiden Teilflächen 116, 177 umfasst, eine Kraft, die gegen die Federkraft der Schließfeder 115 wirkt. Die Aufteilung der Rücklaufdruckwirkfläche in die beiden Teilflächen 116, 117, von denen eine direkt und die andere indirekt mit dem Kühlerrücklaufdruck beaufschlagt ist, sorgt für die notwendige Dämpfung des Mindestdruckventils 105.

Wenn der auf die Rückrücklaufdruckfläche 116, 117 wirkende Druck einen vorgegebenen Mindestdruck von beispielsweise 1,8 bar übersteigt, dann bewegt sich der Ventilkolben 110 in Richtung Schließfeder 115, das heißt in Figur 2 nach links, und im Bereich des Kegelsitzes 112 wird ein Öffnungsquerschnitt freigegeben, so dass Arbeitsmedium, insbesondere Öl, von der Kühlerrücklaufleitung 31 durch die weitere Pumpenansaugleitung 102 über den Pumpeninjektor 70 zur Pumpe 7 strömt. Die zugehörige (nicht dargestellte) Stellung des Ventilkolbens 110 wird auch als Öffnungsstellung bezeichnet.

Durch den Volumenstrom in der Öffnungsstellung des Ventilkolbens 110 baut sich in der Pumpenansaugleitung 102 an dem Pumpeninjektor 70 ein Ansaugdruck auf, der auf die Ansaugdruckwirkfläche 111 des Ventilkolbens 110 wirkt. Dieser Ansaugdruck führt bei höheren Volumenströmen beziehungsweise Drücken in dem Ansaugdruckraum 114 dazu, dass sich der Ventilkolben 110 weiter in Richtung Schließfeder 115, das heißt in Figur 2 nach links, gegen einen entsprechenden Anschlag bewegt. Der Anschlag kann dadurch realisiert sein, dass die Schließfeder 115 auf Block geht.

Ein wesentlicher Vorteil der erfindungsgemäßen Lösung besteht in der einfacheren Bauweise des Kühlerrücklaufventils 69 und darin, dass der Rückstaudruck niedriger gehalten wird, da das Kühlerrücklaufventil 69 als Absolutdruckventil wirkt. Die Absenkung dieses Drucks ergibt wiederum eine Wirkungsgradverbesserung des Gesamtgetriebes. Durch das Mindestdruckventil 105 wird insbesondere verhindert, dass die Pumpe 7 bei geringem Druck in der Kühlerrücklaufleitung 31 Luft aus der Kühlerrücklaufleitung 31 ansaugt, was die Funktion der Pumpe 7 erheblich beeinträchtigen würde. Durch das Mindestdruckventil 105 wird sichergestellt, dass immer ein Mindestdruck vorhanden ist. Das Mindestdruckventil 105 öffnet erst, wenn dieser Mindestdruck überschritten wird.

### Bezugszeichenliste

- 1: Hydraulikanordnung
- 3: Kegelscheiben-Umschlingungsgetriebe
- 5: Kraftfahrzeug
- 7: hydraulische Energiequelle
- 9: erste Ventilanordnung
- 11: Momentenfühler
- 13: zweite Ventilanordnung
- 15: Kegelscheiben
- 17: dritte Ventilanordnung
- 19: Vorwärtskupplung
- 21: Rückwärtskupplung
- 23: Parksperren-Entriegelungsanordnung
- 25: mechanischen Parksperre
- 27: vierte Ventilanordnung
- 29: Kühlkreislauf
- 31: Kühlerrücklauf
- 33: aktive Hydronic-Kühlung
- 35: Strahlpumpe
- 37: Fliehölhaube
- 39: Abzweig
- 41: Vorsteuerdruckregelventil
- 43: Vorsteuerdruck
- 45: Systemdruck
- 47: fünfte Ventilanordnung
- 49: Systemdruckventil
- 51: siebtes Ventil
- 53: siebter Steuerkolben
- 55: achtes Ventil
- 57: erste Flut
- 59: zweite Flut
- 61: Tank
- 63: Oder-Glied
- 65: viertes Ventil
- 67: Kühlölregelventil
- 69: Rückführventil
- 70: Pumpeninjektor
- 71: erstes Ventil
- 73: erster Steuerkolben
- 75: drittes Ventil
- 77: erste Flut
- 79: fünftes Ventil
- 81: sechstes Ventil
- 83: zweite Flut
- 85: Parksperrzylinder
- 87: Stirnseite
- 89: zweites Ventil
- 91: zweiter Steuerkolben
- 93: erster Teilzylinder
- 100: Tank
- 101: Pumpenansaugleitung
- 102: Pumpenansaugleitung
- 105: Mindestdruckventil
- 108: Ventilgehäuse
- 110: Ventilkolben
- 111: Ansaugdruckwirkfläche
- 112: Wirkfläche
- 114: Ansaugdruckraum
- 115: Schließfeder
- 116: Teilfläche
- 117: Teilfläche
- 118: Absatz
- 120: Kühlerrücklaufverbindungsleitung
- 121: Drossel

## Patentansprüche

1. Hydraulikanordnung zur Steuerung eines Kegelscheiben-Umschlingungsgetriebes (3), mit einer Pumpe (7), die ein Arbeitsmedium aus einem Arbeitsmediumtank (100) oder über ein Kühlerrücklaufventil (69) aus einer Kühlerrücklaufleitung (31) ansaugt, wobei das Kühlerrücklaufventil (69) als Mindestdruckventil (105) ausgeführt ist, das eine Verbindung zwischen der Kühlerrücklaufleitung (31) und einer Pumpenansaugleitung (102) durch das Kühlerrücklaufventil (69) geschlossen hält, solange ein vorgegebener Mindestdruck in der Kühlerrücklaufleitung (31) unterschritten wird, und das die Verbindung zwischen der Kühlerrücklaufleitung (31) und der Pumpenansaugleitung (102) durch das Kühlerrücklaufventil (69) öffnet, sobald der vorgegebene Mindestdruck in der Kühlerrücklaufleitung (31) überschritten wird **dadurch gekennzeichnet, dass**.
das Kühlerrücklaufventil (69) einen Ventilkolben (110) mit einer Wirkfläche (112) umfasst, die in einer Schließstellung des Ventilkolbens (110) gegen eine Dichtkante vorgespannt ist, wobei der Ventilkolben (110) eine Rücklaufdruckwirkfläche aufweist, die entgegen einer auf den Ventilkolben (110) wirkenden Vorspannkraft mit dem Druck aus der Kühlerrücklaufleitung (31) beaufschlagt ist, wobei weiterhin die Rücklaufdruckwirkfläche eine Teilfläche (116) aufweist, die direkt mit der Kühlerrücklaufleitung (31) in Verbindung steht wobei die Rücklaufdruckwirkfläche eine weitere Teilfläche (117) aufweist, die über eine Blende (121) mit der Kühlerrücklaufleitung (31) in Verbindung steht.

2. Hydraulikanordnung nach Anspruch 1, **dadurch gekennzeichnet, dass** der Ventilkolben (110) durch eine Schließfeder (115) in seine Schließstellung vorgespannt ist.

3. Hydraulikanordnung nach Anspruch 1 oder 2, **dadurch gekennzeichnet, dass** die Wirkfläche (112) als Kegelsitzfläche ausgeführt ist.

4. Hydraulikanordnung nach den Ansprüchen 1 bis 3, **dadurch gekennzeichnet, dass** die Teilfläche (116) radial außen an der Wirkfläche (112) ausgebildet ist.

5. Hydraulikanordnung nach einem der vorstehenden Ansprüche, **dadurch gekennzeichnet, dass** die Blende (121) einen Durchmesser von etwa 0,75 Millimeter aufweist.

6. Hydraulikanordnung nach einem der vorstehenden Ansprüche, **dadurch gekennzeichnet, dass** der Ventilkolben (110) eine Ansaugdruckwirkfläche (111) aufweist, die mit dem Druck in der Pumpenansaugleitung (102) beaufschlagt ist.

## Claims

1. Hydraulic arrangement for controlling a continuously variable cone-pulley transmission (3), having a pump (7) which sucks a working medium out of a working medium tank (100) or, via a cooler return valve (69), out of a cooler return line (31), wherein the cooler return valve (69) is designed as a minimum-pressure valve (105) which holds a connection between the cooler return line (31) and a pump suction line (102) through the cooler return valve (69) closed for as long as a predefined minimum pressure is undershot in the cooler return line (31), and which opens the connection between the cooler return line (31) and the pump suction line (102) through the cooler return valve (69) when the predefined minimum pressure is exceeded in the cooler return line (31), **characterized in that**
the cooler return valve (69) comprises a valve piston (110) with an effective surface (112) which is preloaded against a sealing edge when the valve piston (110) is in a closed position, wherein the valve piston (110) has a return pressure effective surface which is loaded, counter to a preload force acting on the valve piston (110), by the pressure from the cooler return line (31), wherein, furthermore, the return pressure effective surface has a surface part (116) which is directly connected to the cooler return line (31), wherein the return pressure effective surface has a further surface part (117) which is connected to the cooler return line (31) via an orifice (121).

2. Hydraulic arrangement according to Claim 1, **characterized in that** the valve piston (110) is preloaded into its closed position by a closing spring (115).

3. Hydraulic arrangement according to Claim 1 or 2, **characterized in that** the effective surface (112) is formed as a conical seat surface.

4. Hydraulic arrangement according to Claims 1 to 3, **characterized in that** the surface part (116) is formed radially at the outside on the effective surface (112).

5. Hydraulic arrangement according to one of the preceding claims, **characterized in that** the orifice (121) has a diameter of approximately 0.75 millimetres.

6. Hydraulic arrangement according to one of the preceding claims, **characterized in that** the valve piston (110) has a suction pressure effective surface (111) which is acted on by the pressure in the pump suction line (102).

## Revendications

1. Dispositif hydraulique pour la commande d'une transmission à variation continue (3), avec une pompe (7), qui aspire un fluide de travail à partir d'un réservoir de fluide de travail (100) ou à partir d'une conduite de retour de refroidisseur (31) par l'intermédiaire d'une soupape de retour de refroidisseur (69), dans lequel la soupape de retour de refroidisseur (69) est réalisée sous la forme d'une soupape à pression minimale (105), qui maintient fermé un raccordement entre la conduite de retour de refroidisseur (31) et une conduite d'aspiration de pompe (102) au moyen de la soupape de retour de refroidisseur (69), aussi longtemps qu'une pression minimale prédéterminée dans la conduite de retour de refroidisseur (31) est franchie à la baisse, et qui ouvre le raccordement entre la conduite de retour de refroidisseur (31) et la conduite d'aspiration de pompe (102) au moyen de la soupape de retour de refroidisseur (69), dès que la pression minimale prédéterminée dans la conduite de retour de refroidisseur (31) est franchie à la hausse, **caractérisé en ce que** la soupape de retour de refroidisseur (69) comprend un piston à soupape (110) avec une face active (112) qui, dans une position de fermeture du piston à soupape (110), est précontrainte contre une arête d'étanchéité, dans lequel le piston à soupape (110) présente une soupape active de pression de retour, qui est soumise à la pression provenant de la conduite de retour de refroidisseur (31) contre une force de précontrainte agissant sur le piston à soupape (110), dans lequel la face active de pression de retour présente en outre une face partielle (116), qui est en communication directe avec la conduite de retour de refroidisseur (31), dans lequel la face active de pression de retour présente une autre face partielle (117), qui est en communication avec la conduite de retour de refroidisseur (31) par l'intermédiaire d'un diaphragme (121).

2. Dispositif hydraulique selon la revendication 1, **caractérisé en ce que** le piston à soupape (110) est précontraint dans sa position de fermeture au moyen d'un ressort de fermeture (115).

3. Dispositif hydraulique selon la revendication 1 ou 2, **caractérisé en ce que** la face active (112) est constituée par une face de siège conique.

4. Dispositif hydraulique selon les revendications 1 à 3, **caractérisé en ce que** la face partielle (116) est réalisée radialement à l'extérieur sur la face active (112).

5. Dispositif hydraulique selon l'une quelconque des revendications précédentes, **caractérisé en ce que** le diaphragme (121) présente un diamètre d'environ 0,75 millimètres.

6. Dispositif hydraulique selon l'une quelconque des revendications précédentes, **caractérisé en ce que** le piston à soupape (110) présente une face active de pression d'aspiration (111), qui est soumise à la pression régnant dans la conduite d'aspiration de pompe (102).
